# FASCICULE DE BREVET EUROPEEN

(11) **EP 3 208 191 B1**
(45) Date de publication et mention de la délivrance du brevet: **26.12.2018**
(21) Numéro de dépôt: 17154876.1
(22) Date de dépôt: 06.02.2017
(51) Int. Cl.: B64C 25/50

(54) **ATTERRISSEUR POUR AÉRONEF COMPORTANT UN AMORTISSEUR PRINCIPAL ET UN AMORTISSEUR SECONDAIRE ANTI SHIMMY**
FAHRWERK FÜR LUFTFAHRZEUG, DAS EINEN HAUPTSTOSSDÄMPFER UND EINEN SEKUNDÄREN ANTI-SHIMMY-STOSSDÄMPFER UMFASST
LANDING GEAR FOR AN AIRCRAFT COMPRISING A MAIN SHOCK-ABSORBER AND A SECONDARY ANTI-SHIMMY SHOCK-ABSORBER

(30) Priorité: 10.02.2016 FR 1651081
(43) Date de publication de la demande: 23.08.2017
(73) Titulaire: Safran Landing Systems, 78140 Vélizy-Villacoublay (FR)
(72) Inventeur: DAUPHIN, Florent, 78140 Vélizy-Villacoublay (FR); FORTIER, Florent, 78140 Vélizy-Villacoublay (FR); DUBOIS, Sébastien, 78140 Vélizy-Villacoublay (FR)
(74) Mandataire: Lavialle, Bruno François Stéphane

(56) Documents cités:
- US-A- 2 291 571
- US-A- 2 399 732
- US-A- 2 482 961
- US-A- 2 661 915
- US-A1- 2009 078 079

## Description

La présente invention porte sur un atterrisseur pour aéronef comportant un amortisseur principal et un amortisseur secondaire.

### ARRIERE PLAN DE L'INVENTION

Il est connu par exemple du document brevet WO200058642, un atterrisseur pour aéronef comprenant :
- un axe d'essieu agencé pour porter au moins une roue de roulage de l'aéronef sur le sol ;
- une jambe s'étendant selon un axe principal de jambe et présentant une première partie portant ledit axe d'essieu et une seconde partie adaptée à être reliée une structure porteuse appartenant à l'aéronef, ledit axe principal de jambe passant par ces première et seconde parties de jambe ;
- un amortisseur principal agencé pour amortir des déplacements axiaux de la première partie de jambe par rapport à la seconde partie de jambe ; et
- un premier amortisseur secondaire distinct dudit amortisseur principal et adapté à amortir un mouvement d'oscillation angulaire, autour dudit axe principal de jambe, de la première partie de jambe par rapport à la seconde partie de jambe.

La structure porteuse de l'aéronef est la structure de l'aéronef à laquelle est attaché l'atterrisseur pour transférer les efforts entre l'atterrisseur et le reste de l'aéronef.

Lors du roulage de l'atterrisseur, des phénomènes vibratoires / oscillatoires appelés shimmy, peuvent apparaître entre les première et seconde parties de jambe. Ce phénomène de shimmy comporte au moins une oscillation en rotation, autour de l'axe principal de l'atterrisseur, de la première partie d'atterrisseur par rapport à la seconde partie d'atterrisseur. Cette oscillation en rotation est générée par torsion de la jambe suivant son axe principal. D'autres phénomènes vibratoires/oscillatoires peuvent s'ajouter à cette oscillation en rotation. En particulier, le phénomène de shimmy couple fréquemment des oscillations en flexion longitudinale de la jambe avec des oscillations en rotation autour de l'axe principal de jambe.

Ces phénomènes vibratoires créent un inconfort et il est souhaitable de les supprimer.

Ces phénomènes vibratoires / oscillatoires dépendent de plusieurs facteurs comme la charge de l'atterrisseur, sa forme, sa conception, sa flexibilité, la vitesse du roulage.

Afin d'atténuer ce phénomène, le document brevet WO200058642 suggère d'embarquer un amortisseur particulier, dit amortisseur anti-shimmy ou ci-après amortisseur secondaire. Dans ce document brevet, l'amortisseur secondaire couple la seconde partie de la jambe qui est liée à la structure de l'aéronef avec la première partie de la jambe d'atterrisseur qui porte l'axe d'essieu. Ce couplage mécanique des première et seconde parties de la jambe via l'amortisseur secondaire (amortisseur anti-shimmy) permet d'amortir des oscillations angulaires, autour de l'axe principal de jambe, de la première partie de jambe par rapport à la seconde partie de jambe.

L'intégration de ce type d'amortisseur anti-shimmy dans la géométrie de l'atterrisseur est problématique puisque cet amortisseur secondaire doit réaliser sa fonction d'amortissement tout en permettant le passage de l'atterrisseur d'une configuration déployée hors de la soute à une configuration rétractée où l'atterrisseur se trouve à l'intérieur de la soute.

Un autre exemple de l'art antérieur est fourni par le document US2399732.

### OBJET DE L'INVENTION

Un objet de la présente invention est de fournir un atterrisseur alternatif à
celui décrit dans le document brevet WO200058642 ou à celui décrit dans le document US2399732, cet atterrisseur selon l'invention comportant au moins un premier amortisseur secondaire adapté à amortir des mouvements d'oscillation angulaire de la première partie de jambe par rapport à la seconde partie de jambe.

### RESUME DE L'INVENTION

En vue de la réalisation de cet objet, il est proposé selon l'invention, un atterrisseur pour aéronef comprenant : - un axe d'essieu agencé pour porter au moins une roue de roulage de l'aéronef sur le sol ;- une jambe s'étendant selon un axe principal de jambe et présentant une première partie portant ledit axe d'essieu et une seconde partie adaptée à être reliée une structure porteuse appartenant à l'aéronef ;-un amortisseur principal agencé pour amortir des déplacements axiaux de la première partie de jambe par rapport à la seconde partie de jambe ;- au moins un premier amortisseur secondaire distinct dudit amortisseur principal et adapté à amortir un mouvement d'oscillation angulaire, autour de l'axe principal de jambe, de la première partie de jambe par rapport à la seconde partie de jambe.

Cet atterrisseur selon l'invention est essentiellement caractérisé en ce que
ledit premier amortisseur secondaire est intégralement porté par la seule première partie de jambe, ce premier amortisseur secondaire comportant :- une masse d'inertie; et- des moyens de liaison reliant cette masse d'inertie à la première partie de jambe, ces moyens de liaison étant adaptés à amortir au moins des déplacements en rotation de cette masse d'inertie par rapport à la première partie de jambe et autour de l'axe principal de jambe.

Grâce à l'invention, le premier amortisseur secondaire est fixé sur la première partie de jambe uniquement via ses moyens de liaison qui sont attachés
contre cette première partie de jambe. Ainsi, le premier amortisseur secondaire est intégralement porté par la seule première partie d'atterrisseur. Ce premier amortisseur secondaire se trouve à proximité des zones de la jambe où l'on a les plus grandes amplitudes angulaires d'oscillations entre les première et seconde parties de la jambe, c'est-à-dire sur la pièce à laquelle est fixé l'axe d'essieu.

L'amortissement du shimmy s'en trouve amélioré puisqu'il est réalisé à proximité de la source de l'oscillation, c'est-à-dire à proximité des roues qui transmettent efforts et vibrations lors du roulage.

Par ailleurs, le fait que l'amortisseur secondaire soit uniquement porté par la première partie de jambe, facilite son intégration à l'atterrisseur puisqu'aucune des pièces de l'atterrisseur, hormis éventuellement cette première partie ne doit être modifiée pour intégrer la fonction d'amortissement de shimmy.

Selon un mode de réalisation particulier de l'invention, l'atterrisseur comporte en outre une première jante pour supporter une première roue de roulage de l'aéronef et une seconde jante pour supporter une seconde roue de roulage de l'aéronef. Ces première et seconde jantes sont montées à rotation selon l'axe d'essieu et le premier amortisseur secondaire est monté entre les première et seconde jantes.

Le positionnement de l'amortisseur secondaire, entre les jantes, permet de le rapprocher de l'axe d'essieu qui porte les jantes, l'effet d'amortissement anti-shimmy s'en trouvant amélioré.

Pour augmenter l'efficacité de l'amortisseur secondaire tout en limitant l'encombrement associé à la fonction d'amortissement de shimmy, on peut faire en sorte que le premier amortisseur secondaire soit au moins partiellement disposé à l'intérieur d'une zone creuse de la première jante et à l'intérieur d'une zone creuse de la seconde jante.

La masse d'inertie du premier amortisseur secondaire peut aussi être en forme d'anneau qui s'étend autour de la première partie de jambe. Un tel anneau permet un centrage de la masse autour de l'axe principal de jambe ce qui améliore l'amortissement des oscillations combinant torsion et flexion de la jambe.

Dans ce mode, les moyens de liaison peuvent aussi être adaptés pour permettre un déplacement de la masse en forme d'anneau non seulement un mouvement oscillatoire en rotation de masse autour de la première partie de jambe, mais aussi un mouvement oscillatoire en translation de masse le long de l'axe principal de jambe. Ainsi, le premier amortisseur secondaire pourra avoir un effet d'amortissement sur des déplacements de la jambe parallèlement à l'axe principal de la jambe.

Alternativement au mode de réalisation précédent, les moyens de liaison qui relient la masse d'inertie du premier amortisseur secondaire à la première partie de jambe comportent un bras s'étendant radialement par rapport audit axe principal de jambe et portant cette masse d'inertie à l'une de ses extrémités.

Idéalement, la première partie d'atterrisseur est une tige coulissante s'étendant selon l'axe principal de jambe, l'axe d'essieu s'étendant dans un plan perpendiculaire à l'axe principal de jambe. Les moyens de liaison du premier amortisseur secondaire présentent un premier anneau de fixation enserrant la tige. Ce mode de fixation de l'amortisseur secondaire sur la tige permet d'apporter une fonction d'amortissement du shimmy sans devoir modifier les pièces constitutives de cette jambe d'atterrisseur.

### BREVE DESCRIPTION DES DESSINS

L'invention sera mieux comprise à la lumière de la description qui suit des modes particuliers de réalisation non limitatifs de l'invention, en référence aux figures des dessins annexés parmi lesquelles :
- la figure 1 présente un atterrisseur selon l'invention, plusieurs zones hachurées illustrent des emplacements possibles de fixation d'un ou plusieurs amortisseurs secondaires / amortisseurs anti-shimmy contre et le long de la tige de l'atterrisseur ;
- la figure 2 illustre, des courbes d'amortissement dans le temps d'oscillations angulaires sur un atterrisseur non équipé d'amortisseur secondaire (première courbe d'oscillation angulaire en trait fin) et sur un atterrisseur selon l'invention équipé d'un amortisseur secondaire pour amortir de oscillations angulaires (seconde courbe d'oscillation angulaire en trait épais) ;
- les figures 3a, 3b, 3c, 3d illustrent des vues en coupe transversale de plusieurs amortisseurs secondaires montés sur une tige d'atterrisseur et dont les masses d'inerties sont en forme d'anneau qui s'étend autour de la tige d'atterrisseur, ces figures 3a, 3b, 3c, 3d illustrent différentes manières de réaliser des moyens de liaison entre une masse d'inertie annulaire et la première partie de jambe, en l'occurrence la tige principale de l'atterrisseur ;
- la figure 4a illustre une vue en coupe d'un l'atterrisseur selon l'invention suivant un plan de coupe transversal à l'axe d'essieu, la masse d'inertie étant ici montée à une extrémité d'un bras oscillant autour de l'axe principal de la jambe d'atterrisseur ;
- la figure 4b est une vue en perspective de dessous de l'atterrisseur illustré à la figure 4a.

### DESCRIPTION DETAILLEE DE L'INVENTION

Comme indiqué précédemment, l'invention concerne essentiellement un atterrisseur 1 pour aéronef comprenant un axe d'essieu 2 agencé pour porter au moins une, en l'occurrence deux roues R1, R2 de roulage de l'aéronef sur le sol.

L'atterrisseur 1 comporte une jambe 3 s'étendant selon un axe principal de jambe Z et présentant une première partie 3a portant ledit axe d'essieu 2 et une seconde partie 3b adaptée à être reliée une structure porteuse appartenant à l'aéronef. L'axe d'essieu s'étend dans un plan perpendiculaire à l'axe principal Z de la jambe. Ces première et seconde parties de jambe 3a, 3b sont montées coulissante l'une par rapport à l'autre suivant ledit axe principal de jambe Z qui passe par ces parties 3a, 3b.

Un amortisseur principal 5 est agencé pour amortir des déplacements axiaux, suivant l'axe principal de jambe Z, de la première partie de jambe 3a par rapport à la seconde partie de jambe 3b.

Bien que cela ne soit pas représenté sur les figures, il est possible que l'atterrisseur selon l'invention comporte un mécanisme d'orientation adapté à orienter la première partie de la jambe 3a par rapport à la seconde partie de la jambe 3b par rotation de la première partie de jambe selon un axe d'orientation s'étendant le long de la jambe et préférentiellement confondu avec l'axe principal Z.

L'atterrisseur selon l'invention comporte aussi un premier amortisseur secondaire 6a distinct dudit amortisseur principal et adapté à amortir un mouvement d'oscillation angulaire, autour de l'axe principal de jambe Z, de la première partie de jambe 3a par rapport à la seconde partie de jambe 3b.

Dans tous les modes de réalisation de l'invention, ce premier amortisseur secondaire 6a est de type comportant :
- au moins une masse d'inertie M; et
- des moyens de liaison 7a qui relient cette masse d'inertie M à la première partie de jambe 3a, ces moyens de liaison 7a étant adaptés à amortir au moins des déplacements en rotation de cette masse d'inertie M par rapport à la première partie de jambe 3a et autour de l'axe principal de jambe Z.

Ainsi, ce premier amortisseur secondaire 6a est porté par la première partie de jambe 3a et sa masse d'inertie M s'étend à l'extérieur de cette première partie de jambe pour pouvoir osciller autour de l'axe principal Z de la jambe.

Le mouvement de shimmy est associé à une torsion de la jambe et à une flexion de la jambe suivant son axe principal Z. La torsion implique une rotation de la première partie de jambe vis-à-vis de la seconde partie de jambe, cette rotation entrainant le premier amortisseur secondaire en rotation autour de l'axe principal Z.

Lorsque la première partie de jambe 3a est mise en mouvement dans un plan perpendiculaire à l'axe principal Z (par rotation de la jambe autour de l'axe Z et/ou translation de la première partie dans un plan perpendiculaire à l'axe Z), elle transmet alors de l'énergie à la masse d'inertie M de l'amortisseur secondaire via les moyens de liaison 7a. En retour, la masse d'inertie M, via ces mêmes moyens de liaison 7a, applique un contre-effort sur première partie de jambe 3a (ensemble bas de jambe). Les oscillations de jambe sont ainsi amorties par dissipation d'énergie au niveau des moyens de liaison 7a.

La masse M, et les moyens de liaison 7a sont préférentiellement définis afin de viser l'amortissement d'une fréquence propre de l'atterrisseur donnée.

Grâce à l'invention, le shimmy est au moins partiellement amorti parce que le ou les amortisseurs secondaires 6a, 6b qui sont assemblés sur la première partie de jambe 3a, à distance de la première partie 3b, captent de l'énergie pour la mise en mouvement de la masse M et aussi pour l'amortissement des oscillations de cette masse M par rapport à la première partie de tige.

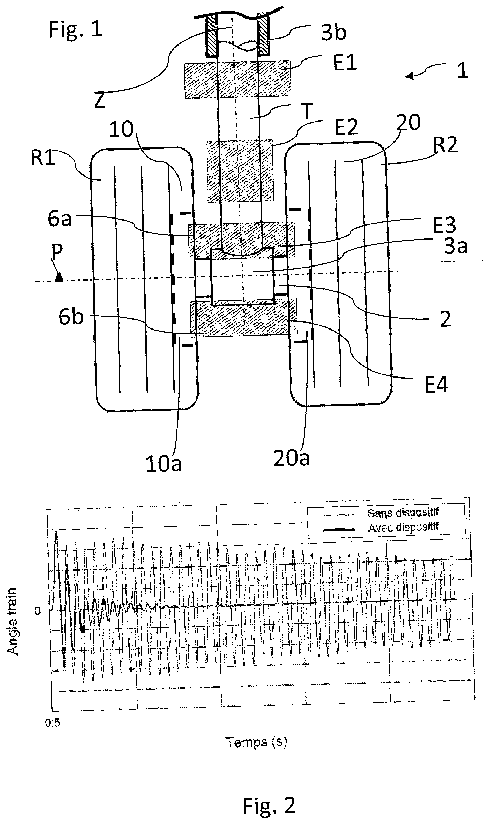

Comme illustré sur les figures 1, 3a, 3b, 3c, 3d, 4a, 4b, la première partie de jambe 3a comporte une tige T, dite tige principale, qui s'étend suivant l'axe principal Z, l'axe d'essieu 2 s'étendant depuis cette tige T et suivant un plan P perpendiculaire à l'axe principal Z. La seconde partie de jambe comporte généralement un fut pour accueillir en coulissement une partie de la tige T.

Les zones hachurées illustrées à la figure 1 illustrent différents emplacements E1, E2, E3, E4 de la première partie de la jambe qui peuvent porter un premier amortisseur secondaire 6a et éventuellement un second amortisseur secondaire 6b, dans le cas où la première partie porterait plusieurs amortisseurs secondaire du type prédéfini.

Le premier emplacement E1 est situé sur la tige T, au-dessus des roues R1, R2 qui sont respectivement portées par l'essieu 2 via les jantes 10, 20. Cet emplacement E1 est avantageux car il permet d'avoir une masse d'inertie M s'étendant à grande distance de l'axe principal Z sans être limité par la distance minimale allant d'une roue à la tige T.

Un deuxième emplacement possible E2 est situé entre les roues R1, R2, sur une portion de la tige T en vis-à-vis d'une partie haute des roues R1, R2. Cet emplacement E2 est avantageux car il permet un amortissement de shimmy sans augmenter l'encombrement de l'atterrisseur. Par ailleurs, l'amortisseur secondaire 6a est éloigné de la zone des freins (puit de chaleur) et se trouve ainsi mieux préservé.

Un troisième emplacement possible E3 est situé entre les roues R1, R2, sur la tige T, à proximité immédiate de l'essieu 2. Cet emplacement E3 s'étend jusqu'à l'intérieur de zones creuses 10a, 20a respectives des jantes 10, 20 qui portent les roues R1, R2. Ce mode de réalisation est intéressant car, d'une part la masse d'inertie M peut être disposée à une grande distance de l'axe Z, ce qui permet :
- d'augmenter le bras de levier autour de l'axe Z nécessaire à l'amortissement ; et
- de placer l'amortisseur secondaire à très grande proximité de l'axe d'essieu 2 (là où sont les amplitudes angulaires de mouvements à amortir sont maximales).

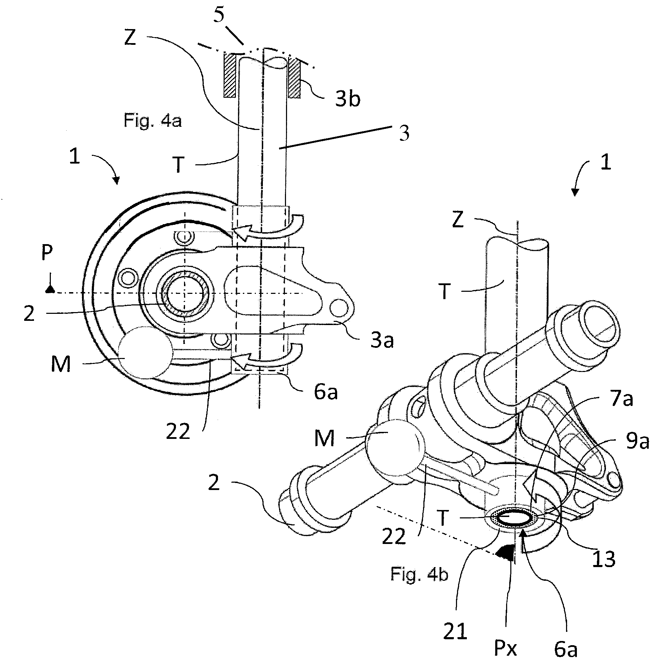

Un quatrième emplacement possible E4 est situé entre les roues R1, R2 (entre les jantes 10, 20), sur la tige T, à proximité immédiate de l'essieu 2 et en dessous de ce dernier. Cet emplacement E4 peut, si nécessaire, s'étendre jusqu'à l'intérieur des zones creuses 10a, 20a respectives des jantes 10, 20. Ce mode de réalisation est intéressant car, comme pour l'emplacement E3, on peut augmenter le bras de levier d'amortissement tout en étant proche de l'axe d'essieu 2. L'atterrisseur de la figure 4a comporte un exemple d'amortisseur secondaire placé dans l'emplacement E4.

Dans les modes de réalisation illustrés aux figues 3a, 3b, 3c, 3d et 4a, 4b, les moyens de liaison 7a qui relient ladite masse d'inertie M à la première partie de jambe 3a comportent :
- des moyens élastiques de rappel 8a de la masse d'inertie M vers une position fixe de repos de la masse d'inertie M par rapport à l'axe d'essieu 2; et
- des moyens d'amortissement 9a qui présentent un coefficient d'amortissement de valeur prédéterminée.

Ces moyens élastiques de rappel 8a présentent une valeur de raideur angulaire en rotation de la masse d'inertie M autour de l'axe principal de jambe Z et par rapport à la première partie de jambe 3a qui est constante.

Le coefficient d'amortissement est un coefficient d'amortissement des mouvements de rotation de masse M autour de l'axe principal de jambe Z et par rapport à la première partie de jambe 3a.

La prédétermination du coefficient de raideur et du coefficient d'amortissement des mouvements autour de l'axe Z permet de définir la manière dont l'atterrisseur selon l'invention amortie les mouvements de shimmy.

La figure 2 illustre l'amortissement dans le temps d'un mouvement angulaire autour de l'axe Z. La courbe en trait fin correspond à un atterrisseur ne disposant pas d'amortisseur secondaire. La courbe en trait gras correspond à un atterrisseur équipé d'un amortisseur secondaire conformément à l'invention. On constate que l'atterrisseur selon l'invention permet une forte atténuation des oscillations angulaires par rapport à l'atterrisseur sans amortisseur secondaire.

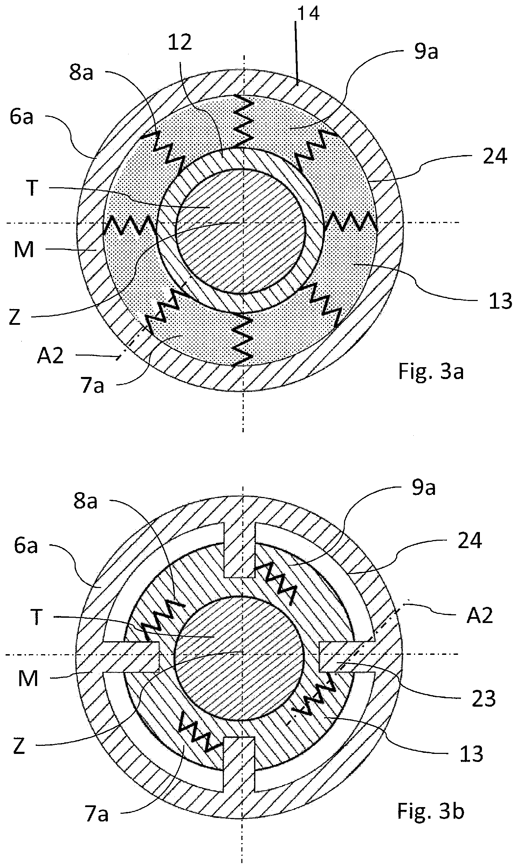

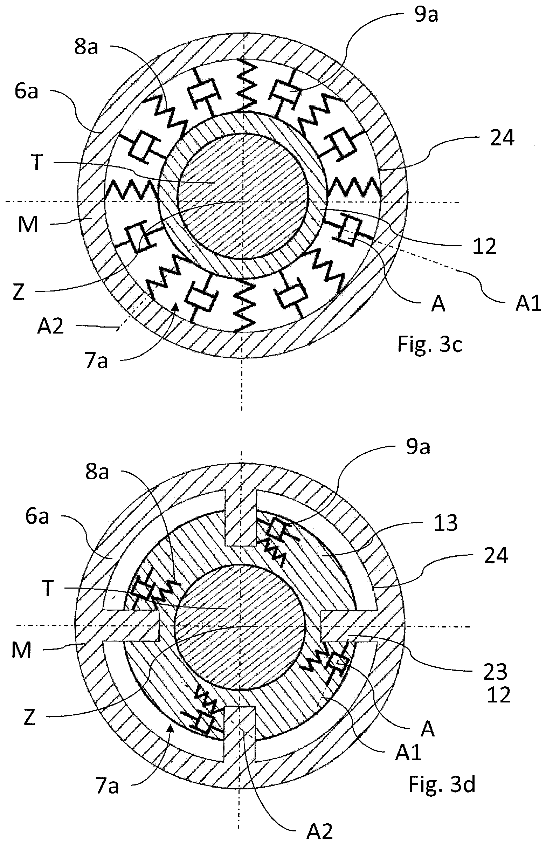

Comme illustré aux figures 3a, 3c, les moyens de liaison 7a qui relient la masse d'inertie M du premier amortisseur secondaire 6a à la première partie de jambe 3a peuvent comporter un premier anneau de fixation 12 assujetti avec et autour de ladite première partie de jambe (en l'occurrence la tige T). Ce premier anneau de fixation 12 permet de centrer et fixer par serrage l'amortisseur secondaire 6a autour d'une portion cylindrique de la première partie de jambe.

Alternativement, les moyens d'amortissement peuvent avoir la forme d'un manchon 13 en élastomère directement emmanché autour de la tige T et dans ce cas ce manchon élastomère 13 joue aussi le rôle d'un anneau de fixation comme sur les figures 3b, 3d, 4a, 4b.

Il est à noter que ce manchon en élastomère 13 peut aussi s'étendre au contact d'une face interne cylindrique 24 de la masse annulaire M, comme sur la figure 3a ou être écarté de cette face interne de la masse M comme sur les figures 3b et 3d.

La liaison mécanique entre ce manchon élastomère 13 et la masse M peut se faire via des excroissances 23 internes de la masse M s'étendant depuis une face interne cylindrique 24 de la masse M vers l'axe Z et venant pénétrer dans le manchon depuis l'extérieur de ce manchon élastomère E. Ces excroissances 23 permettent un couplage en rotation entre le manchon 13 et la masse M tout ayant un espace entre la masse 13 et le manchon 13 entre les excroissances 23. Ceci facilite limite l'usure du manchon par contact avec la masse M et par cisaillement à l'endroit de ce contact.

Dans le mode des figures 4a, 4b, la masse d'inertie la masse M peut être portée à l'extrémité du bras 22.

Dans ce mode, le premier amortisseur secondaire 6a comporte un anneau de maintien 21 du bras 22 qui s'étend tout autour de l'axe principal de jambe Z. Ce bras 22 est assujetti à l'une de ses extrémités avec l'anneau de maintien 21 alors que l'autre de ses extrémités porte la masse M. Cette masse M est ici sphérique mais elle pourrait avoir toute autre forme compacte. Comme illustré sur ces figures 4a, 4b, la liaison entre cet anneau de maintien 21 et l'anneau de fixation 12 peut se faire via les moyens élastiques de rappel 8a et les moyens d'amortissement 9a.

Du fait de cet agencement de l'anneau de fixation 12, de l'anneau de maintien 21 et des moyens élastiques de rappel 8a, lorsque l'anneau de maintien 21 est pivoté par rapport à l'axe principal de jambe Z, les moyens élastiques de rappel 8a exercent alors un couple élastique de rappel de l'anneau de maintien 21 vers une position fixe de repos par rapport à la première partie de jambe 3a. Dans cette position fixe de repos, le bras 22 se trouve préférentiellement dans un plan de symétrie Px de la jambe dans lequel s'étend aussi l'axe principal de jambe Z. La masse M est alors à équidistance entre les jantes 10, 20.

Nous allons maintenant illustrer, en référence aux figures 3a, 3b, 3c, 3d, plusieurs agencements possibles des moyens élastiques de rappel 8a et moyens d'amortissement 9a qui permettent de relier la tige T à un anneau annulaire de la tige et écarté de cette dernière. Cet anneau annulaire de la tige est ici une masse annulaire M, mais il pourrait aussi être un anneau de maintien 21 de masse M, dans le cas précité où la masse M est portée par un bras 22 s'étendant radialement depuis l'anneau de maintien 21.

Sur chacune des figures 3a, 3b, 3c, 3d, la masse M de l'amortisseur secondaire 6a est annulaire et s'étend tout autour d'une partie longitudinale de la tige T.

Les moyens élastiques 8a, comportent des ressorts répartis entre la tige T et la masse annulaire M. Ces ressorts 8a maintiennent la tige T et la masse annulaire M écartées l'une de l'autre pour permettre une oscillation en translation radiale par rapport à l'axe Z et/ou en rotation par rapport à cet axe Z.

Ces ressorts 8a peuvent être disposés pour que leurs axes de compression ou de traction élastique A2 soient radiaux par rapport à la tige T (c'est-à-dire par rapport à l'axe Z), comme sur les figures 3a et 3c. Dans cette disposition, les ressorts sont efficaces pour amortir des oscillations en translation radiale de la masse M par rapport à la tige T et aussi des oscillations angulaires en rotation de la masse M autour de l'axe Z.

Comme illustré aux figures 3b et 3d, certains au moins des ressorts 8a sont disposés pour que l'axe de compression ou de traction A2 de ressort soit perpendiculaires à plus ou moins 45° par rapport à plan radial à l'axe Z qui lui correspond. Ceci permet d'avoir une capacité améliorée d'amortissement d'oscillations radiales de la masse M autour de l'axe Z.

Quel que soit le mode de positionnement des ressorts 8a, ceux-ci peuvent être placés dans un élastomère, qui peut avoir la forme de manchon élastomère 13. L'élastomère constitutif du manchon 13 a une capacité d'amortissement de déformations des ressorts qui y sont intégrés (voir les figures 3b et 3d).

Comme illustré aux figures 3c et 3d, il est aussi possible que des amortisseurs à fluide A soient utilisés pour transmettre des efforts entre la tige T et la masse M. Chaque amortisseur à fluide A présente un axe d'amortissement privilégié A1 et une chambre de compression de fluide dont le volume varie en fonction de déplacements relatifs entre la masse M et la tige T.

Pour certains au moins de ces amortisseurs à fluide A, on peut avoir un axe d'amortissement privilégié A1 orienté :
- radialement par rapport à l'axe Z, comme sur la figure 3c, (ce qui permet un amortissement amélioré des oscillations radiales) ; ou être
- perpendiculairement, à plus ou moins 45°, par rapport à un plan radial à l'axe Z, comme sur la figure 3d (ce qui permet un amortissement amélioré des oscillations angulaires).

Comme discuté précédemment et illustré aux figures 3a, 3b, 3c, 3d et 4a, 4b, un premier anneau de fixation 12 peut être utilisé pour assujettir l'amortisseur secondaire 6a avec et autour de la tige T. Cet anneau 12 qui enserre une portion cylindrique de la tige T peut comporter des moyens d'ajustement de son diamètre intérieur pour régler son serrage autour de la tige T.

Les ressorts 8a et amortisseurs à fluide A peuvent, si nécessaire, être directement reliés à cet anneau de fixation 12.

Il est à noter que, comme illustré dans le mode de réalisation des figures 4a et 4b, un simple manchon annulaire élastique 13 concentrique de l'axe principal de jambe Z peut s'étendre tout autour du premier anneau de fixation 12 et former à lui seul les moyens élastiques 8a et moyens d'amortissement 9a.

Ce manchon élastique 13 peut être formé d'un matériau présentant des raideur élastique et coefficient d'amortissement prédéterminés. Ainsi, ce manchon 13 fournit à la fois une fonction de rappel élastique et une fonction d'amortissement. Comme décrit précédemment, des ressorts de rappel ou d'amortisseurs à fluide peuvent être intégrés dans ce manchon élastique 13 pour améliorer la fonction de rappel élastique et/ou d'amortissement.

L'invention ne concerne pas uniquement ce qui vient d'être décrit, en particulier elle peut aussi concerner un mode de réalisation non représenté dans lequel la première partie de jambe 3a porte un second amortisseur secondaire 6b distinct dudit premier amortisseur secondaire 3a. Ce second amortisseur secondaire 3a comporte :
- une seconde masse d'inertie ; et
- des seconds moyens de liaison reliant cette seconde masse d'inertie à ladite première partie de jambe 3a, ces seconds moyens de liaison étant adaptés à amortir des déplacements en rotation de cette seconde masse d'inertie M autour de l'axe de jambe Z et par rapport à ladite première partie de jambe 3a.

La seconde masse d'inertie du second amortisseur secondaire 6b peut être en forme d'anneau 14 s'étendant autour de ladite première partie de jambe 3a.

En d'autres termes, si nécessaire, la tige T peut porter plusieurs amortisseurs secondaires du type dudit premier amortisseur secondaire.

Chaque amortisseur secondaire 6a, 6b peut être adapté pour amortir une plage de fréquences d'oscillations donnée qui lui correspond. Ces plages de fréquences d'oscillation qui correspondent aux différents amortisseurs secondaires peuvent être identiques entre elles ou distinctes les unes des autres.

A cet effet, la masse et/ou le coefficient de raideur et/ou le coefficient d'amortissement des moyens de liaison 7a de chaque amortisseur secondaire 6a, 6b peuvent être différents de la masse, des coefficients de raideur et d'amortissement du ou des autres amortisseurs secondaires.

Ceci permet d'adapter chaque amortisseur secondaire pour qu'il fournisse un type d'amortissement particulier qui lui est propre, ces amortisseurs secondaires étant ainsi complémentaires entre eux.

Ainsi, si l'atterrisseur présente plusieurs plages de fréquences propres de vibration, on pourra adapter chaque amortisseur secondaire pour qu'il permette un amortissement d'une seule de ces plages de fréquences et l'on aura autant de types d'amortisseurs secondaires que l'on a de plages de fréquences à amortir.

## Revendications

1. Atterrisseur (1) pour aéronef comprenant :
- un axe d'essieu (2) agencé pour porter au moins une roue de roulage de l'aéronef sur le sol ;
- une jambe (3) s'étendant selon un axe principal de jambe (Z) et présentant une première partie (3a) portant ledit axe d'essieu (2) et une seconde partie (3b) adaptée à être reliée à une structure porteuse appartenant à l'aéronef, ledit axe principal de jambe (Z) passant par ces première et seconde parties de jambe (3a, 3b) ;
- un amortisseur principal (5) agencé pour amortir des déplacements axiaux de la première partie de jambe (3a) par rapport à la seconde partie de jambe (3b) ;
- un premier amortisseur secondaire (6a) distinct dudit amortisseur principal et adapté à amortir un mouvement d'oscillation angulaire, autour de l'axe principal de jambe (Z), de la première partie de jambe (3a) par rapport à la seconde partie de jambe (3b), **caractérisé en ce que** ledit premier amortisseur secondaire (6a) est intégralement porté par la seule première partie de jambe (3a), ce premier amortisseur secondaire (6a) comportant :
- une masse d'inertie (M); et
- des moyens de liaison (7a) reliant cette masse d'inertie (M) à la première partie de jambe (3a), ces moyens de liaison (7a) étant adaptés à amortir au moins des déplacements en rotation de cette masse d'inertie (M) par rapport à la première partie de jambe (3a) et autour de l'axe principal de jambe (Z).

2. Atterrisseur selon la revendication 1, comportant en outre une première jante (10) pour supporter une première roue de roulage de l'aéronef et une seconde jante pour supporter une seconde roue de
roulage de l'aéronef, ces première et seconde jantes étant montées à rotation selon l'axe d'essieu (2), le premier amortisseur secondaire (6a) étant monté entre les première et seconde jantes (10, 20).

3. Atterrisseur selon la revendication 2, dans lequel le premier amortisseur secondaire (6a) est au moins partiellement disposé à l'intérieur d'une zone creuse (10a) de la première jante (10) et à l'intérieur d'une zone creuse (20a) de la seconde jante (20).

4. Atterrisseur, selon l'une quelconque des revendications précédentes, dans lequel la masse d'inertie du premier amortisseur secondaire (6a) est en forme d'anneau (14) et s'étend autour de ladite première partie de jambe (3a).

5. Atterrisseur, selon l'une quelconque des revendications 1 à 3, dans lequel les moyens de liaison (7a) qui relient la masse d'inertie (M) du premier amortisseur secondaire (6a) à la première partie de jambe (3a) comportent un bras (22) s'étendant radialement par rapport audit axe principal de jambe (Z) et portant cette masse d'inertie (M) à l'une de ses extrémités.

6. Atterrisseur selon l'une quelconque des revendications 1 à 5, dans lequel lesdits moyens de liaison (7a) adaptés pour relier ladite masse d'inertie (M) dudit premier amortisseur secondaire (6a) à ladite première partie de jambe comportent un premier anneau de fixation (12) assujetti avec et autour de ladite première partie de jambe et un manchon annulaire élastique (13) concentrique dudit axe principal de jambe (Z), ce manchon annulaire élastique s'étendant tout autour du premier anneau de fixation (12).

7. Atterrisseur selon l'une quelconque des revendications 1 à 6, dans lequel lesdits moyens de liaison (7a) reliant ladite masse d'inertie (M) à la première partie de jambe (3a) comportent :
- des moyens élastiques de rappel (8a) de la masse d'inertie (M) vers une position fixe de repos de la masse d'inertie par rapport à l'axe d'essieu (2); et
- des moyens d'amortissement (9a) qui présentent un coefficient d'amortissement de valeur prédéterminée.

8. Atterrisseur selon la revendication 7, dans lequel lesdits moyens élastiques de rappel (8a) présentent une valeur de raideur angulaire en rotation de la masse d'inertie (M) autour de l'axe principal de jambe (Z) et par rapport à la première partie de jambe (3a) qui est constante.

9. Atterrisseur, selon l'une quelconque des revendications 1 à 8, dans lequel ladite première partie de jambe (3a) porte un second amortisseur secondaire (6b) distinct dudit premier amortisseur secondaire (6a), ce second amortisseur secondaire (6b) comportant :
- une seconde masse d'inertie ; et
- des seconds moyens de liaison reliant cette seconde masse d'inertie à ladite première partie de jambe (3a), ces seconds moyens de liaison étant adaptés à amortir des déplacements en rotation de cette seconde masse d'inertie (M) autour de l'axe de jambe (Z) et par rapport à ladite première partie de jambe (3a).

10. Atterrisseur, selon la revendication 9, dans lequel la seconde masse d'inertie du second amortisseur secondaire (6b) est en forme d'anneau (14) et s'étend autour de ladite première partie de jambe (3a).

## Patentansprüche

1. Fahrwerk (1) für ein Luftfahrzeug, umfassend:
- eine Achswelle (2), die ausgebildet ist, um mindestens ein Rad für das Rollen des Luftfahrzeugs auf dem Boden zu tragen;
- ein Bein (3), das sich entlang einer Hauptachse (Z) des Beins erstreckt und einen ersten Teil (3a) aufweist, der die genannte Achswelle (2) trägt, sowie einen zweiten Teil (3b), der dazu geeignet ist, mit einer zum Luftfahrzeug gehörenden tragenden Struktur verbunden zu werden, wobei die genannte Hauptachse (Z) des Beins durch diesen ersten und diesen zweiten Beinteil (3a, 3b) hindurchgeht;
- einen Hauptstoßdämpfer (5), der ausgebildet ist, um axiale Bewegungen des ersten Beinteils (3a) in Bezug auf den zweiten Beinteil (3b) zu dämpfen;
- einen ersten Sekundärstoßdämpfer (6a), der vom genannten Hauptstoßdämpfer verschieden und dazu geeignet ist, eine Bewegung einer Winkelschwingung um die Beinhauptachse (Z) des ersten Beinteils (3a) in Bezug auf den zweiten Beinteil (3b) zu dämpfen, **dadurch gekennzeichnet, dass** der genannte erste Sekundärstoßdämpfer (6a) vollständig einzig von dem ersten Beinteil (3a) getragen wird, wobei dieser erste Sekundärstoßdämpfer (6a) umfasst:
- eine Trägheitsmasse (M); und
- Verbindungsmittel (7a), die diese Trägheitsmasse (M) mit dem ersten Beinteil (3a) verbinden, wobei diese Verbindungsmittel (7a) dazu geeignet sind, zumindest Drehbewegungen dieser Trägheitsmasse in Bezug auf den ersten Beinteil (3a) und um die Beinhauptachse (Z) herum zu dämpfen.

2. Fahrwerk nach Anspruch 1, ferner umfassend eine erste Felge (10) zum Tragen eines ersten Rades für das Rollen des Luftfahrzeugs und eine zweite Felge zum Tragen eines zweiten Rades für das Rollen des Luftfahrzeugs, wobei diese erste und zweite Felge drehbar um die Achswelle (2) gelagert sind, wobei der erste Sekundärstoßdämpfer (6a) zwischen der ersten und der zweiten Felge (10, 20) montiert ist.

3. Fahrwerk nach Anspruch 2, bei dem der erste Sekundärstoßdämpfer (6a) zumindest teilweise im Inneren einer hohlen Zone (10a) der ersten Felge (10) und im Inneren einer hohlen Zone (20a) der zweiten Felge (20) angeordnet ist.

4. Fahrwerk nach einem der vorhergehenden Ansprüche, bei dem die Trägheitsmasse des ersten Sekundärstoßdämpfers (6a) die Form eines Rings (14) hat und sich um den genannten ersten Beinteil (3a) herum erstreckt.

5. Fahrwerk nach einem der vorhergehenden Ansprüche 1 bis 3, bei dem die Verbindungsmittel (7a), die die Trägheitsmasse (M) des ersten Sekundärstoßdämpfers (6a) mit dem ersten Beinteil (3a) verbinden, einen Arm (22) umfassen, der sich radial in Bezug auf die genannte Beinhauptachse (Z) erstreckt und an einem seiner Enden diese Trägheitsmasse (M) trägt.

6. Fahrwerk nach einem der Ansprüche 1 bis 5, bei dem die genannten Verbindungsmittel (7a), die dazu geeignet sind, die genannte Trägheitsmasse (M) des genannten ersten Sekundärstoßdämpfers (6a) mit dem ersten Beinteil zu verbinden, einen ersten Befestigungsring (12) umfassen, der an und um den genannten ersten Beinteil herum befestigt ist, sowie eine elastische ringförmige Hülse (13), die konzentrisch zur Beinhauptachse (Z) ist, wobei sich diese elastische ringförmige Hülse ganz um den ersten Befestigungsring (12) herum erstreckt.

7. Fahrwerk nach einem der Ansprüche 1 bis 6, bei dem die genannten Verbindungsmittel (7a), die die genannte Trägheitsmasse (M) mit dem ersten Beinteil (3a) verbinden, umfassen:
- elastische Rückstellmittel (8a) zum Rückstellen der Trägheitsmasse (M) in Richtung einer ortsfesten Ruheposition der Trägheitsmasse in Bezug auf die Achswelle (2); und
- Dämpfungsmittel (9a), die einen Dämpfungskoeffizienten mit vorgegebenem Wert aufweisen.

8. Fahrwerk nach Anspruch 7, bei dem die genannten elastischen Rückstellmittel (8a) einen Wert einer Winkelsteifigkeit bei Drehung der Trägheitsmasse (M) um die Beinhauptachse (Z) und in Bezug auf den ersten Beinteil (3a) aufweisen, der konstant ist.

9. Fahrwerk nach einem der Ansprüche 1 bis 8, bei dem der genannte erste Beinteil (3a) einen zweiten Sekundärstoßdämpfer (6b) trägt, der von dem genannten ersten Sekundärstoßdämpfer (6a) verschieden ist, wobei dieser zweite Sekundärstoßdämpfer (6b) umfasst:
- eine zweite Trägheitsmasse; und
- zweite Verbindungsmittel, die diese zweite Trägheitsmasse mit dem genannten ersten Beinteil (3a) verbinden, wobei diese zweiten Verbindungsmittel dazu geeignet sind, Drehbewegungen dieser zweiten Trägheitsmasse (M) um die Beinachse (Z) und in Bezug auf den genannten ersten Beinteil (3a) zu dämpfen.

10. Fahrwerk nach Anspruch 9, bei dem die zweite Trägheitsmasse des zweiten Sekundärstoßdämpfers (6b) die Form eines Rings (14) hat und sich um den genannten ersten Beinteil (3a) herum erstreckt.

## Claims

1. Aircraft landing gear (1) comprising:
- an axle shaft (2) designed to carry at least one wheel via which the aircraft runs along the ground;
- a strut (3) extending along a main strut axis (Z) and having a first part (3a) carrying the said axle shaft (2) and a second part (3b) designed to be connected to a bearing structure belonging to the aircraft, the said main strut axis (Z) passing through these first and second strut parts (3a, 3b);
- a main damper (5) designed to damp axial movements of the first strut part (3a) with respect to the second strut part (3b);
- a first secondary damper (6a) distinct from the said main damper and designed to damp a movement of angular oscillation, about the main strut axis (Z), of the first strut part (3a) with respect to the second strut part (3b), **characterized in that** the said first secondary damper (6a) is wholly carried by the first strut part (3a) alone, this first secondary damper (6a) comprising:
- an inertial mass (M); and
- connecting means (7a) connecting this inertial mass (M) to the first strut part (3a), these connecting means (7a) being designed to damp at least rotational movements of this inertial mass (M) with respect to the first strut part (3a) and about the main strut axis (Z).

2. Landing gear according to Claim 1, further comprising a first rim (10) for supporting a first wheel on which the aircraft runs and a second rim for supporting a second wheel on which the aircraft runs, these first and second rims being mounted for rotation about the axle shaft (2), the first secondary damper (6a) being mounted between the first and second rims (10, 20).

3. Landing gear according to Claim 2, in which the first secondary damper (6a) is at least partially arranged inside a hollow zone (10a) of the first rim (10) and inside a hollow zone (20a) of the second rim (20).

4. Landing gear according to any one of the preceding claims, in which the inertial mass of the first secondary damper (6a) is in the shape of a ring (14) and extends around the said first strut part (3a).

5. Landing gear according to any one of Claims 1 to 3, in which the connecting means (7a) which connect the inertial mass (M) of the first secondary damper (6a) to the first strut part (3a) comprise an arm (22) extending radially with respect to the said main strut axis (Z) and carrying this inertial mass (M) at one of its ends.

6. Landing gear according to any one of Claims 1 to 5, in which the said connecting means (7a) designed to connect the said inertial mass (M) of the said first secondary damper (6a) to the said first strut part comprise a first fixing ring (12) secured to and around the said first strut part and an elastic annular sleeve (13) concentric with the said main strut axis (Z), this elastic annular sleeve extending all around the first fixing ring (12).

7. Landing gear according to any one of Claims 1 to 6, in which the said connecting means (7a) connecting the said inertial mass (M) to the first strut part (3a) comprise:
- elastic return means (8a) returning the inertial mass (M) towards a fixed rest position of the inertial mass with respect to the axle shaft (2); and
- damping means (9a) which have a damping coefficient of predetermined value.

8. Landing gear according to Claim 7, in which the said elastic return means (8a) have a value of angular stiffness of the inertial mass (M) in rotation about the main strut axis (Z) and with respect to the first strut part (3a) which is constant.

9. Landing gear according to any one of Claims 1 to 8, in which the said first strut part (3a) carries a second secondary damper (6b) distinct from the said first secondary damper (6a), this second secondary damper (6b) comprising:
- a second inertial mass; and
- second connecting means connecting this second inertial mass to the said first strut part (3a), these second connecting means being designed to damp rotational movements of this second inertial mass (M) about the strut axis (Z) and with respect to the said first strut part (3a).

10. Landing gear according to Claim 9, in which the second inertial mass of the second secondary damper (6b) is in the shape of a ring (14) and extends around the said first strut part (3a).
